# DEMANDE DE BREVET EUROPEEN

(11) **EP 2 477 084 A1**
(43) Date de publication de la demande: **18.07.2012**
(21) Numéro de dépôt: 11151273.7
(22) Date de dépôt: 18.01.2011
(51) Int. Cl.: G04G 17/04, G04G 17/06

(54) **Montre comprenant un connecteur zébra pour la connexion électrique entre un dispositif d'affichage numérique et une carte de circuit imprimé et procédé d'assemblage d'une telle montre**

(71) Demandeur: ETA SA Manufacture Horlogère Suisse, 2540 Grenchen (CH)
(72) Inventeur: Kaltenrieder, André, 2515, Prêles (CH); Jufer, Martin, 4917, Melchnau (CH); Racine, Christian, 2735, Malleray-Bévilard (CH); Bovet, Jean-Luc, 4500, Solothurn (CH); Grosjean, Jérôme, 2534, Orvin (CH)
(74) Mandataire: Giraud, Eric

(57) **Abrégé**

Procédé de soudage par ultrasons d'une glace de montre (4), la montre comprenant une carrure (2) qui délimite avec la glace (4) une boîte de montre (1), la glace (4) comprenant une face supérieure (8) orientée du côté de l'utilisateur et une face inférieure (10) opposée orientée du côté de la boîte de montre (1), un dispositif d'affichage numérique (12) étant fixé sur la face inférieure (10) de la glace (4), une carte de circuit imprimé (26) étant disposée dans la boîte de montre (1), sous le dispositif d'affichage numérique (12) et à distance de celui-ci, le dispositif d'affichage numérique (12) étant connecté électriquement à la carte de circuit imprimé (26) au moyen d'un connecteur électrique de type zébra (30), ce procédé étant caractérisé en ce que la glace (4) étant en appui sur une portée (6) ménagée dans la carrure (2), on dirige les ultrasons sur la portée (6) pour faire fondre cette portée (6) et abaisser le niveau de la glace (4) en direction de la plaque à circuit imprimé (26), de sorte que le connecteur zébra (30) se retrouve comprimé entre le dispositif d'affichage numérique (12) et la carte de circuit imprimé (26).

## Description

La présente invention concerne un procédé de soudage par ultrasons d'une glace sur la carrure d'une montre. Plus précisément, la présente invention concerne un tel procédé de soudage qui garantit un bon contact électrique entre un dispositif d'affichage fixé sur la face intérieure de la glace et une carte de circuit imprimé disposée à distance sous le dispositif d'affichage.

Dans le domaine de la fabrication industrielle, on cherche toujours, autant par souci d'économie que par volonté d'atteindre la plus grande fiabilité possible, à automatiser le plus possible les différentes étapes de fabrication d'un produit. La fabrication en grande série de montres n'échappe pas à cette règle. Dans ce domaine, la qualité de la fixation des différents composants et la fiabilité des connexions électriques sont déterminantes. En effet, de la qualité de la fixation des composants dépend notamment l'étanchéité de la montre. Par ailleurs, des connexions électriques fiables sont gages d'un bon fonctionnement de la montre dans le temps.

La présente invention s'intéresse à une montre de type électronique à affichage digital de l'heure. Cette montre comprend notamment, collé sur la face intérieure de la glace, un dispositif d'affichage numérique tel qu'une cellule d'affichage à cristal liquide relié au moyen d'un connecteur de type zébra à une carte de circuit imprimé sur laquelle sont montés les différents composants électroniques de commande de la montre. Cette carte de circuit imprimé est logée dans la boîte de la montre, sous le dispositif d'affichage numérique et à distance de celui-ci.

Les problèmes rencontrés lors de la fabrication des premiers prototypes de cette montre ont été de deux types. On s'est tout d'abord rendu compte que le contact électrique entre le dispositif d'affichage et la carte de circuit imprimé n'était pas toujours fiable. On s'est par ailleurs interrogé sur la meilleure manière de fixer la glace sur la carrure de la montre afin de garantir l'étanchéité de cette dernière.

La présente invention a pour but de résoudre ces problèmes en proposant d'améliorer la fiabilité de la connexion électrique entre le dispositif d'affichage numérique et la carte de circuit imprimé. Dans le même temps, on a cherché à fixer la glace de la montre au moyen d'un soudage par ultrasons. En effet, il est connu que le soudage par ultrasons permet de solidariser la glace sur la carrure de la montre de manière parfaitement étanche et fiable dans le temps.

Ces objectifs sont atteints grâce à la présente invention qui divulgue une montre comprenant une carrure qui délimite avec une glace une boîte de montre, la glace comprenant une face supérieure orientée du côté de l'utilisateur et une face inférieure opposée orientée du côté de la boîte de montre, un dispositif d'affichage numérique étant fixé sur la face inférieure de la glace, une carte de circuit imprimé étant disposée dans la boîte de montre, sous le dispositif d'affichage numérique et à distance de celui-ci, le dispositif d'affichage numérique étant connecté électriquement à la carte de circuit imprimé au moyen d'un connecteur électrique de type zébra, la glace étant en appui sur une portée ménagée dans la carrure, la montre étant caractérisée en ce que la hauteur de la portée par rapport à la carte de circuit imprimé est telle que, lorsqu'on solidarise la glace sur la portée, le connecteur zébra est comprimé entre le dispositif d'affichage numérique et la carte de circuit imprimé.

Selon un autre aspect, la présente invention enseigne un procédé de soudage par ultrasons d'une glace de montre, la montre comprenant une carrure qui délimite avec la glace une boîte de montre, la glace comprenant une face supérieure orientée du côté de l'utilisateur et une face inférieure opposée orientée du côté de la boîte de montre, un dispositif d'affichage numérique étant fixé sur la face inférieure de la glace, une carte de circuit imprimé étant disposée dans la boîte de montre, sous le dispositif d'affichage numérique et à distance de celui-ci, le dispositif d'affichage numérique étant connecté électriquement à la carte de circuit imprimé au moyen d'un connecteur électrique de type zébra, ce procédé étant caractérisé en ce que la glace étant en appui sur une portée ménagée dans la carrure, on dirige les ultrasons sur la portée pour faire fondre cette portée et abaisser le niveau de la glace en direction de la plaque à circuit imprimé, de sorte que le connecteur zébra se retrouve comprimé entre la cellule d'affichage à cristal liquide et la carte de circuit imprimé.

Selon une première variante de réalisation de l'invention, avant l'étape de soudage par ultrasons, le connecteur zébra est à l'état détendu.

Selon une deuxième variante de réalisation de l'invention, avant l'étape de soudage par ultrasons, le connecteur zébra est à l'état précontraint.

Grâce à ces caractéristiques, la présente invention procure une pièce d'horlogerie dont le niveau de la glace par rapport à une carte de circuit imprimé disposée dans la boîte de montre est tel que lorsqu'on solidarise la glace sur la carrure de la montre, un connecteur zébra assurant la connexion électrique entre la carte de circuit imprimé et un dispositif d'affichage numérique fixé sous la glace est à l'état comprimé, avec un taux de compression optimum. Il est ainsi possible, en une seule étape, de garantir à la fois la fixation de la glace sur la carrure et ainsi assurer l'étanchéité du système et une connexion électrique fiable entre le dispositif d'affichage et la carte de circuit imprimé qui porte les composants électroniques nécessaires au bon fonctionnement du dispositif d'affichage.

Le soudage par ultrasons se fait au moyen d'une sonotrode. Quand on applique cette sonotrode contre la glace de la montre, la glace vient en appui contre la portée de la carrure qui sert de directeur d'énergie et le connecteur zébra se trouve précontraint. Le connecteur zébra sera encore davantage contraint lorsqu'on soude la glace sur la carrure. En effet, sous l'effet de l'apport d'énergie ultrasonore, la portée fond et le niveau de la glace s'abaisse en direction de la plaque à circuit imprimé.

La présente invention divulgue également un procédé de soudage par ultrasons qui permet simultanément la fixation de la glace sur la carrure de la montre et une connexion électrique fiable entre le dispositif d'affichage numérique et la carte de circuit imprimé sur laquelle sont montés les composants électroniques nécessaires au bon fonctionnement du dispositif d'affichage. On sait en effet que le soudage par ultrasons permet de solidariser la glace sur la carrure de la montre de manière parfaitement étanche et durable. Par ailleurs, lors du soudage par ultrasons, au moins une partie de la portée de la carrure sur laquelle la glace est en appui fond, ce qui provoque un abaissement du niveau du dispositif d'affichage par rapport à la carte de circuit imprimé. Comme l'écart entre le dispositif d'affichage et la carte de circuit imprimé se réduit, le connecteur zébra se comprime, ce qui lui permet d'assurer une connexion électrique fiable entre le dispositif d'affichage et la carte de circuit imprimé.

D'autres caractéristiques et avantages de la présente invention ressortiront plus clairement de la description détaillée qui suit d'un mode de mise en oeuvre du procédé selon l'invention, cet exemple étant donné à titre purement illustratif et non limitatif seulement en liaison avec le dessin annexé sur lequel:
- la figure 1 est une vue partielle en coupe d'une boîte de montre pour la mise en oeuvre du procédé selon l'invention avant l'étape de soudage par ultrasons;
- la figure 2 est une vue identique à celle de la figure 1 après l'étape de soudage par ultrasons, et
- la figure 3 est une vue partielle en coupe d'une boîte de montre selon un deuxième aspect de l'invention.

La présente invention procède de l'idée générale inventive consistant à procurer une pièce d'horlogerie dont la glace est fixée à un niveau tel qu'au cours d'une seule étape de fabrication, il est a la fois possible de solidariser la lunette sur la carrure et d'assurer une connexion électrique fiable des composants électroniques.

Dans un mode de réalisation particulièrement avantageux de l'invention, il est prévu de souder par ultrasons la glace sur la carrure de la montre, cette glace comportant sur sa face inférieure un dispositif d'affichage de type numérique connecté via un connecteur de type zébra à une carte de circuit imprimé sur laquelle sont montés au moins les composants électroniques nécessaires au fonctionnement du dispositif d'affichage. En procédant de la sorte, le bénéfice est double: d'une part, le soudage par ultrasons permet de solidariser la lunette sur la carrure de la montre de manière parfaitement étanche et durable et, d'autre part, la connexion électrique entre le dispositif d'affichage numérique et la carte de circuit imprimé est fiable. En effet, sous l'effet de l'élévation de température induite par le soudage par ultrasons, une partie de la carrure qui sert de directeur d'énergie est consommée, ce qui provoque un abaissement du niveau de la glace et donc du dispositif d'affichage par rapport à la carte de circuit imprimé. Le dispositif d'affichage se rapprochant de la carte à circuit imprimé, ces deux composants se retrouvent à distance optimale de compression du connecteur zébra qui assure ainsi une parfaite connexion électrique.

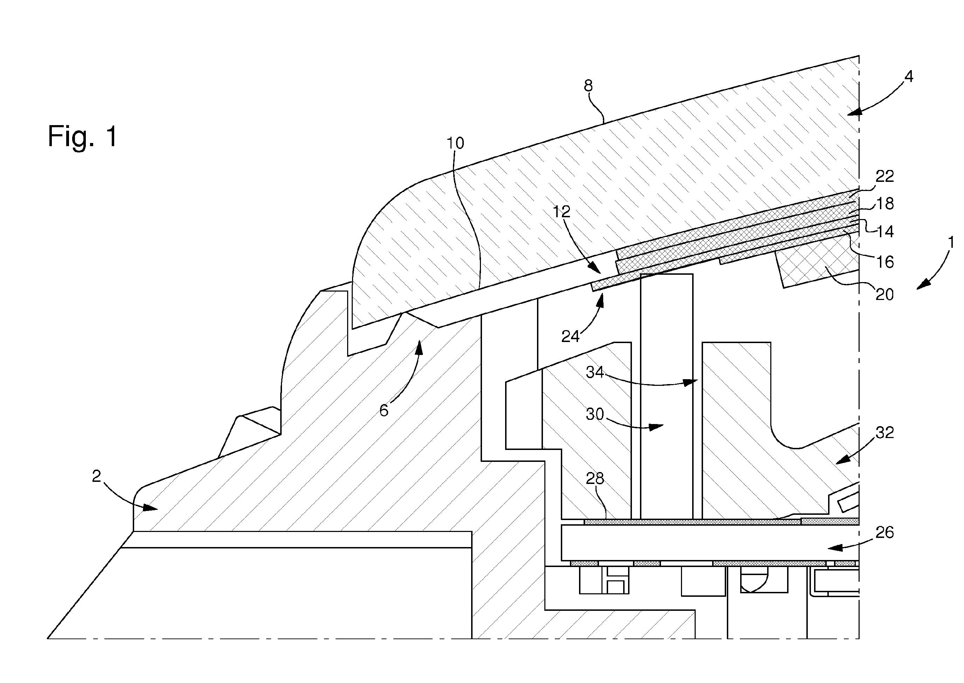

La figure 1 est une vue partielle en coupe d'une boîte de montre pour la mise en oeuvre du procédé selon l'invention avant l'étape de soudage par ultrasons. Désignée dans son ensemble par la référence numérique générale 1, cette boîte de montre est délimitée par une carrure 2 et une glace de montre 4. La carrure 2 et la glace de montre 4 sont réalisées en des matériaux aptes à être soudés par ultrasons. La glace 4 est en appui sur une portée 6 de la carrure 2. Comme on le verra en détail ci-après, la portée 6 sert de directeur d'énergie et permet d'amorcer la fusion des matériaux plastiques en contact par l'action du faisceau d'ultrasons utilisé pour souder par ultrasons la glace de montre 4 sur la carrure 2.

La glace de montre 4 comprend deux faces, à savoir une face supérieure 8 dirigée du côté de l'utilisateur de la montre et une face inférieure 10 dirigée du côté de la boîte de montre 1. Un dispositif d'affichage numérique est fixé sur la face inférieure 10 de la glace. A titre d'exemple non limitatif seulement, ce dispositif d'affichage numérique peut être une cellule d'affichage à cristal liquide 12 en plastique souple comprenant un substrat avant 14 et un substrat arrière 16 s'étendant parallèlement et à distance l'un de l'autre et réunis entre eux par un cadre de scellement (non visible au dessin) qui délimite un volume étanche pour le confinement du cristal liquide. Les deux substrats avant 14 et arrière 16 sont disposés entre un premier et un second polariseurs, respectivement 18 et 20, dont les directions de polarisation sont croisées. L'ensemble formé par les deux substrats 14 et 16 et les deux polariseurs 18 et 20 est collé au moyen d'une couche de colle optique 22 sur la face inférieure 10 de la glace de montre 4.

On voit à l'examen de la figure 1 que les dimensions du substrat avant 14 excèdent celles du substrat arrière 16. Ceci permet de ménager une surface de contact 24 sur laquelle débouchent des pistes conductrices 25 pour la connexion électrique des électrodes de commande de la cellule d'affichage 12 avec les composants électroniques (non représentés) de commande de la cellule 12. Ces composants électroniques de commande sont montés sur une carte de circuit imprimé 26 disposée dans la boîte de montre 1, sous la cellule d'affichage 12 et à distance de celle-ci. Conformément à l'invention, les pistes conductrices 25 pour la connexion électrique des électrodes de commande de la cellule d'affichage à cristal liquide 12 sont reliées à des pistes conductrices correspondantes 28 structurées à la surface de la carte de circuit imprimé 26 au moyen d'un connecteur élastomère 30 qui s'étend sensiblement verticalement. On rappelle qu'un connecteur élastomère, également connu sous sa dénomination commerciale de connecteur zébra, est un connecteur souple formé d'une pluralité de feuilles conductrices séparées les unes des autres par des feuilles isolantes en élastomère. Le montage est complété par un guide de lumière 32 qui prend appui sur la carte de circuit imprimé 26 et qui sert à l'éclairage par l'arrière ou rétro-éclairage de la cellule d'affichage à cristal liquide 12. On notera que le guide de lumière 32 comprend une fente 34 pour le guidage et le maintien vertical du connecteur zébra 30.

Tel que représenté à la figure 1, le connecteur zébra 30 est à l'état détendu avant soudage par ultrasons de la glace de montre 4 sur la carrure 2. Selon une seconde variante de mise en oeuvre du procédé selon l'invention non représentée au dessin, le connecteur zébra 30 pourrait déjà être partiellement comprimé avant l'opération de soudage. On notera qu'au sens de la présente invention, on entend par "comprimé" le fait que le connecteur zébra présente une hauteur qui est inférieure à celle qui est la sienne lorsqu'aucune contrainte ne s'exerce sur lui.

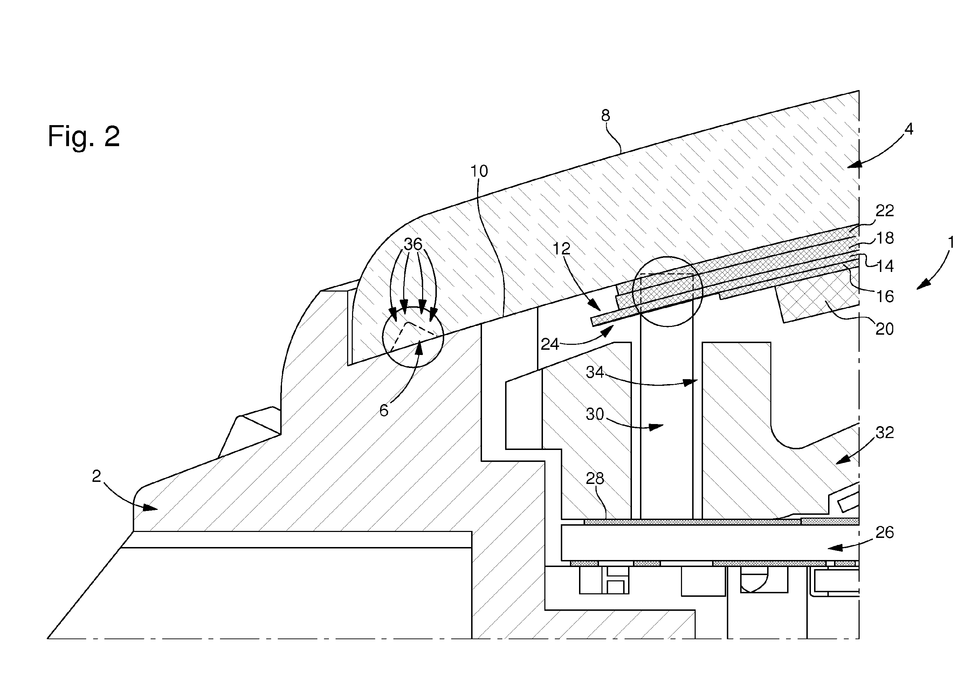

Comme déjà mentionné ci-dessus, la glace de montre 4 est en appui sur une portée 6 de la carrure 2 (voir figure 2). Cette portée 6 sert de directeur d'énergie au faisceau d'ultrasons utilisé pour souder la glace de montre 4 sur la carrure 2. A cet effet, et conformément au procédé selon l'invention, on dirige en 36 les ultrasons sur la portée 6 pour faire fondre cette portée 6 et abaisser le niveau de la glace 4 en direction de la carte de circuit imprimé 26, de sorte que le connecteur zébra 30 se retrouve comprimé entre la cellule d'affichage à cristal liquide 12 et la carte de circuit imprimé 26. La fraction de la portée 6 qui est consommée lors du soudage et la diminution de hauteur du connecteur zébra 30 résultant de la compression de ce dernier sont représentées en pointillés dans des zones entourées d'un cercle sur la figure 2.

Ainsi, grâce au procédé selon l'invention, on soude la glace de montre 4 sur la carrure 2 au moyen d'un faisceau d'ultrasons, ce qui garantit un soudage durable et parfaitement étanche et, simultanément, on comprime le connecteur zébra 30, ce qui garantit une connexion électrique fiable entre la cellule d'affichage à cristal liquide 12 et les composants électroniques de commande de cette cellule 12 montés sur la carte de circuit imprimé 26.

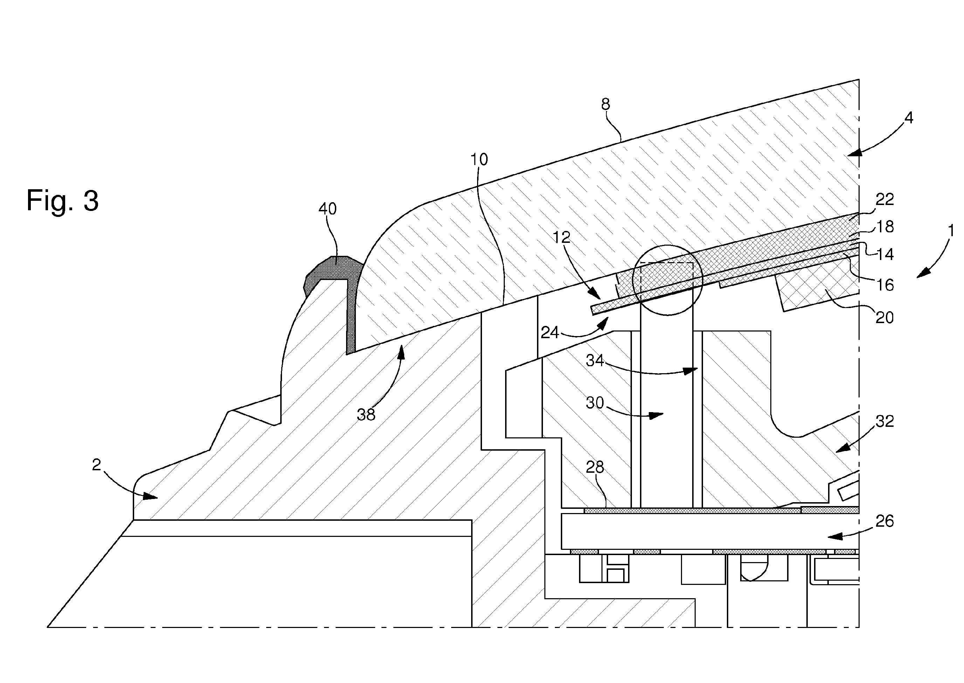

La figure 3 illustre un autre aspect de la présente invention. Sur cette figure, les éléments identiques à ceux déjà décrits en liaison avec les figures 1 et 2 seront désignés par les mêmes références numériques. On voit sur la figure 3 que la glace de montre 4 est en appui sur une portée 38 de la carrure 2 dont l'élévation ou hauteur par rapport à la carte de circuit imprimé 26 est telle que, lorsque la glace 4 est posée sur la portée 38, le connecteur zébra 30 est comprimé. En d'autres termes, le connecteur zébra 30 présente une hauteur qui est inférieure à sa hauteur à l'état complètement détendu. Grâce à cette caractéristique, on garantit une connexion électrique fiable entre la cellule d'affichage à cristal liquide 12 et la carte de circuit imprimé 26. La glace de montre 4 est solidarisée sur la carrure 2 de la montre au moyen d'un trait de colle 40.

Il va de soi que la présente invention n'est pas limitée au mode de réalisation qui vient d'être décrit et que diverses modifications et variantes simples pourront être envisagées par l'homme du métier sans sortir du cadre de l'invention tel que défini par les revendications annexées. En particulier, dans le but de réduire au maximum les pertes, on peut, avant le soudage, effectuer un contrôle électrique du dispositif d'affichage en pressant celui-ci en butée contre le directeur d'énergie de la carrure. De la sorte, le connecteur zébra se retrouve comprimé et assure la bonne connexion électrique entre le dispositif d'affichage et les composants de la carte à circuit imprimé, ce qui permet d'effectuer tous les test nécessaires.

## Revendications

1. Montre comprenant une carrure (2) qui délimite avec une glace (4) une boîte de montre (1), la glace (4) comprenant une face supérieure (8) orientée du côté de l'utilisateur et une face inférieure (10) opposée orientée du côté de la boîte de montre (1), un dispositif d'affichage numérique (12) étant fixé sur la face inférieure (10) de la glace (4), une carte de circuit imprimé (26) étant disposée dans la boîte de montre (1), sous le dispositif d'affichage numérique (12) et à distance de celui-ci, le dispositif d'affichage numérique (12) étant connecté électriquement à la carte de circuit imprimé (26) au moyen d'un connecteur électrique de type zébra (30), la glace (4) étant en appui sur une portée (38) ménagée dans la carrure (2), la montre étant **caractérisée en ce que** la hauteur de la portée (38) par rapport à la carte de circuit imprimé (26) est telle que, quand la glace (4) est solidarisée sur la portée (38), le connecteur zébra (30) est comprimé entre le dispositif d'affichage numérique (12) et la carte de circuit imprimé (26).

2. Procédé de soudage par ultrasons d'une glace de montre (4), la montre comprenant une carrure (2) qui délimite avec la glace (4) une boîte de montre (1), la glace (4) comprenant une face supérieure (8) orientée du côté de l'utilisateur et une face inférieure (10) opposée orientée du côté de la boîte de montre (1), un dispositif d'affichage numérique (12) étant fixé sur la face inférieure (10) de la glace (4), une carte de circuit imprimé (26) étant disposée dans la boîte de montre (1), sous le dispositif d'affichage numérique (12) et à distance de celui-ci, le dispositif d'affichage numérique (12) étant connecté électriquement à la carte de circuit imprimé (26) au moyen d'un connecteur électrique de type zébra (30), ce procédé étant **caractérisé en ce que** la glace (4) étant en appui sur une portée (6) ménagée dans la carrure (4), on dirige les ultrasons sur la portée (6) pour faire fondre cette portée (6) et abaisser le niveau de la glace (4) en direction de la plaque à circuit imprimé (26), de sorte que le connecteur zébra (30) se retrouve comprimé entre le dispositif d'affichage numérique (12) et la carte de circuit imprimé (26).

3. Procédé selon la revendication 2, **caractérisé en ce que**, avant l'étape de soudage par ultrasons, le connecteur zébra est à l'état détendu.

4. procédé selon la revendication 2, **caractérisé en ce que** avant l'étape de soudage par ultrasons, le connecteur zébra est à l'état précontraint.
